(19) **Europäisches Patentamt**

**European Patent Office**

**Office européen des brevets**

(11) **EP 0 618 445 B1**

(12) **EUROPÄISCHE PATENTSCHRIFT**

(45) Veröffentlichungstag und Bekanntmachung des Hinweises auf die Patenterteilung:
**16.06.2004   Patentblatt 2004/25**

(51) Int Cl.$^{7}$: **G01N 27/80**, G01N 27/90

(21) Anmeldenummer: **94104284.8**

(22) Anmeldetag: **18.03.1994**

(54) **Verfahren zum zerstörungsfreien Untersuchen von Oberflächen elektrisch leitfähiger Werkstoffe**

Method for non-destructive surface examination of electrically conducting materials

Procédé de contrôle non-déstructif des surfaces des matériaux électro-conducteurs

(84) Benannte Vertragsstaaten:
**DE FR GB IT SE**

(30) Priorität: **02.04.1993   DE 4310894**

(43) Veröffentlichungstag der Anmeldung:
**05.10.1994   Patentblatt 1994/40**

(73) Patentinhaber: **ROBERT BOSCH GMBH**
**70442 Stuttgart (DE)**

(72) Erfinder:
- **Dobler, Klaus, Dr.-Ing.**
  **D-70839 Gerlingen (DE)**
- **Hachtel, Hansjörg, Dipl.-Ing. (FH)**
  **D-71287 Weissach (DE)**
- **Rehbein, Peter, Dipl.-Ing.**
  **D-71229 Leonberg (DE)**

(56) Entgegenhaltungen:

| | |
|---|---|
| WO-A-87/01203 | DE-A- 4 310 893 |
| DE-B- 1 017 372 | US-A- 5 017 869 |

- **PATENT ABSTRACTS OF JAPAN vol. 009, no. 037 (P-335), 16.Februar 1985 & JP-A-59 178356 (NIPPON DENSHI KK), 9.Oktober 1984,**
- **PATENT ABSTRACTS OF JAPAN vol. 011, no. 164 (P-580), 27.Mai 1987 & JP-A-62 000853 (MITSUBISHI MOTORS CORP), 6.Januar 1987,**
- **SOVIET JOURNAL OF NONDESTRUCTIVE TESTING, Bd. 24, Nr. 10, Oktober 1988, Seiten 667-674, XP000033774 SUKHORUKOV V V ET AL: "EDDY-CURRENT THICKNESS GAUGES FOR THE QUALITY CONTROL OF METAL COATING OF HOLES IN PRINTED CIRCUIT BOARDS"**
- **HTM HÄRTEREI TECHNISCHE MITTEILUNGEN, Bd. 48, Nr. 2, 1.März 1993, Seiten 97-106, XP000359350 NEHRING J ET AL: "PRüFPOTENTIAL MODERNER WIRBELSTROM-PRüFVERFAHREN IM RAHMEN DER QUALITäTSSICHERUNG GEHäRTETER BAUTEILE"**
- **ZWF ZEITSCHRIFT FUR WIRTSCHAFTLICHE FERTIGUNG, Bd. 73, Nr. 2, 1978, MUNCHEN DE, Seiten 89-94, XP002001860 LIEDTKE D: "ZERSTÖRUNGSFREIES MESSEN DER VERBINDUNGSSCHICHTDICKE SALZBADNITRIERTER PROBEN"**

## Beschreibung

Stand der Technik

Die Erfindung geht aus von einem Verfahren nach der Gattung des unabhängigen Anspruchs 1. Es wurde bereits in mehreren Veröffentlichungen vorgeschlagen, zerstörungsfreie Prüfungen von Werkstoffen mit Hilfe des Wirbelstromverfahrens vorzunehmen. Eine Einführung in das Verfahren sowie mögliche Prüfspulenbauarten finden sich zum Beispiel in dem Buch von Heptner und Stroppe, "Werkstoffprüfung", Seiten 129 bis 141. Danach eignet sich das Wirbelstromverfahren u. a. zur Prüfung der mechanischen Härte eines Werkstoffes sowie der Dicke von insbesondere dünnen metallischen Schichten. Geeignete Spulenbauarten sind zum Beispiel eine Tastspule, welche auf der Werkstückoberfläche aufgesetzt wird, oder eine Innenspule, welche zum Beispiel zur Prüfung sehr dickwandiger Rohre oder Bohrungen dient.

Aus der Zeitschrift "HTM", Nr. 4 1986, Seiten 213 bis 218, ist der Vorschlag bekannt, ein Wirbelstrommeßverfahren zur Bestimmung der Überlagerungspermeabilität zu verwenden. Über die aus dieser ableitbare Koerzitiv-Feldstärke wird eine Aussage über die Tiefe der wärmebeeinflußten Schicht erhalten. Der Meßaufbau besteht im wesentlichen aus einer Spule sowie einem getrennt von der Spule angeordneten Aufnehmer. Obgleich mit dieser Meßanordnung bereits eine Reihe guter Prüfaussagen möglich ist, insbesondere bezüglich Härte und Dicke der Oberflächenschicht, sind doch der Meßaufbau und die Verfahrensdurchführung vergleichsweise kompliziert.

Eine weitere Anwendung des Wirbelstrommeßverfahrens zum zerstörungsfreien Messen der Verbindungsschichtdicke salzbadnitrierter Proben ist aus der "Zeitschrift für wirtschaftliche Fertigung", 1978, Heft 2, Seiten 89 bis 94, bekannt. Dabei erfolgt die Schichtdickenbestimmung bei fester Frequenz der Prüfspulenwechselspannung anhand der für das zu prüfende Material gemessenen Impedanz. Als Meßsonde dient eine Spule. Aussagen über die Härte der geprüften Schicht liefert dieses Verfahren nicht. Auch ist es für Frequenzen kleiner als 3 MHz wegen des dann stärker werdenden Einflusses von Permeabilitätsschwankungen des Grundwerkstoffes nur bedingt geeignet.

Zur Bestimmung der Härte eines Prufkörpers als Funktion der Frequenz bzw der Tiefe ist in der Schrift JP-A-59 178 356 (Patent Abstract of Japan Bd. 009, Nr. 037 (P 335)) vorgesehen den Einsenverlust ("iron loss") durch ein Leistungsmessgerät zu bestimmen. Aus diesem Einsenverlust, d.h. des elektrischen Verlustleistung, die durch das erzeugte magnetische Wechselfeld in einem Prüfling hiergorgerufen und die durch das Leistungsmessgerät gemessen wird, wird dann durch entsprechende Zuordnung die Härte bestimmt. Die elektrische Verlustleistung ermöglicht nur eine Aussage über die Leitfähigkeit des Prüflings in der betreffenden gerade untersuchten Schicht. Diese Schrift wurde zur Bildung des Oberbegriffs des Anspruchs 1 heraugezogen.

Aus WO-A-8 701 203 ist eine Prüfsende bekannt, die zwei Spulen aufweist, die um einen Ferrit-Kern gewickelt sind, und die eine voreingestellte Differenz ihrer Impedanz aufweisen. Die beiden Spulen sind bifilar gewickelt. Die Impedanzdifferenz ist erforderlich, um mit dieser Prüfsonde zweifelsfrei Anderungen in Amplitude bzw. Phase des detektierten magnetischen Weckselfeldes zu messen, die durch Defekte im Prüfling hiervorgerufen werden. Hinweise auf Induktivitätsmessungen sind nicht entnehmbar.

Aufgabe der Erfindung ist es, ein Verfahren anzugeben, welches schnell und hinreichend zuverlässige Aussagen über Härte, Dicke, und Gefügezustand der Oberfläche eines elektrisch leitfähigen Werkstoffes liefert. Diese Aufgabe wird gelöst durch ein Verfahren mit den Merkmalen des Anspruchs 1. Das erfindungsgemäße Verfahren liefert in einfacher Weise durch Messen der Spuleninduktivität eine Aussage über Härte, Dicke und/oder Gefügebezustand der untersuchten Oberflächenschicht. Dabei wird von dem an sich bekannten Zusammenhang zwischen der Eindringtiefe des von der Spule erzeugten magnetischen Wechselfeldes, der Spuleninduktivität und der Härte, beziehungsweise des Gefügezustandes Gebrauch gemacht. In der einfachsten Verfahrensvariante wird die Frequenz des Spulenwechselstroms so gewählt, daß die daraus resultierende Eindringtiefe des von der Spule erzeugten magnetischen Wechselfeldes in den zu. untersuchenden Werkstoff innerhalb einer geforderten Gesamtdicke der untersuchten Oberflächenschicht liegt. Zweckmäßig erfolgt die Frequenzwahl dabei so, daß die Eindringtiefe des Wechselfeldes entweder klein gegen die geforderte Gesamtdicke der behandelten Oberflächenschicht ist, oder dieser etwa entspricht. Aus der sich einstellenden Induktivität der Spule kann je nach Vorbehandlung des untersuchten Werkstoffes auf die Härte - zum Beispiel bei geschliffenen Nitrierschichten, die Gefügebeschaffenheit - zum Beispiel bei noch unbehandelten Nitrierschichten, und/oder auf die Oberflächenrauhigkeit geschlossen werden. Ferner ist es möglich festzustellen, ob die geprüfte Oberfläche nachgeschliffen wurde, oder eine Aussage über die Gesamtqualität einer gehärteten Oberflächenschicht über den untersuchten Dickenbereich abzuleiten.

Vorteilhaft ist es, eine Messung bei einer Frequenz mit einer gegen eine geforderte Dicke kleinen Eindringtiefe und eine Messung einer Frequenz mit einer etwa der geforderten Dicke der untersuchten Oberflächenschicht entsprechenden Eindringtiefe zu einem zweistufigen Verfahren zusammenzufassen, innerhalb dessen sie nacheinander ausgeführt werden. Ein solches zweistufiges Verfahren liefert durch die bei hoher Frequenz erfolgende Messung sowohl eine Aussage über eine dünne, die tatsächliche Oberfläche bildende Schicht, als auch durch die bei niedrigerer Frequenz erfolgende Messung eine Aussage über die Schicht unmittelbar unterhalb der Oberfläche. Damit wird insbesondere das Problem überwunden, daß einerseits eine nur hochfrequente Messung zu einer falschen Einschätzung der Substanz der untersuchten Schicht führen kann, andererseits eine nur niederfrequente Messung keine Aussage über die Verhältnisse an der eigentlichen Oberfläche liefert.

Eine besonders vorteilhafte Weiterbildung des erfindungsgemäßen Verfahrens besteht darin, innerhalb eines Prüfvorgangs die Frequenz des Spulenwechselfeldes schrittweise von einem kleinsten zu einem größten Wert zu erhöhen, und dabei jedesmal die Induktivität zu messen. Aus den erhaltenen Meßwerten läßt sich, da jeder vorgegebenen Spulenfrequenz eine zugeordnete Eindringtiefe entspricht, für den untersuchten Werkstoff ein charakteristisches Härteprofil, das graphisch als Härteprofilkurve darstellbar ist, ableiten. Aus einer Härteprofilkurve können in einfacher Weise die Dicke sowie bei einigen Materialien, insbesondere bei nitrierten Metallen, Aussagen über den Gefügezustand der untersuchten Oberflächenschicht abgleitet werden.

Das Verfahren eignet sich besonders zur Untersuchung der Oberflächenbeschaffenheit nitrierter Metalle. Bei Nitrierschichten kann gegebenenfalls die Dicke einer vorhandenen Verbindungsschicht bestimmt werden. Zur Verifizierung eventuell beobachteter Schichtstrukturen werden zweckmäßig begleitende Plausibilitätsbetrachtungen vorgenommen. Dies empfielt sich besonders für im Vergleich zur Gesamtdicke der untersuchten Oberflächenschicht dünne Teilschichten, insbesondere für Verbindungsschichten bei nitrierten Metallen. Liegt ein mehrschichtiger Gefügezustand vor, ist es ferner sinnvoll, die Härteprofilkurve entsprechend dem Einfluß der unterschiedlichen Oberflächenschichten auf das Meßergebnis nachträglich zu korrigieren, um ihre Aussagekraft zu erhöhen.

Zweckmäßig erfolgen Messungssteuerung und Auswertung der gewonnenen Meßergebnisse mit Hilfe eines Computers. Prüfen auf Vorhandensein einer Verbindungsschicht kann dazu dienen, festzustellen, ob die geprüfte Oberfläche nachgeschliffen wurde.

Sollen Einflüsse, die von Änderungen der Legierungselemente oder der Legierungsanteile der untersuchten Oberfläche herrühren, möglichst klein gehalten werden, ist es zweckmäßig, eine Bezugsmessung mittels einer Referenzspule vorzusehen. Als Meßsignal wird zum Beispiel das Differenzsignal der Prüfspule und der Referenzspule verwendet, wobei die Referenzspule die Induktivität eines nichtbehandelten Grundmaterials erfaßt.

Zur weiteren Verbesserung der Genauigkeit kann es von Vorteil sein, eine Bezugsmessung derart durchzuführen, daß jeweils vor und nach der Wärmebehandlung eine Messung an Prüf- und Referenzmaterial vorgenommen wird.

Die zur Durchführung des Verfahrens eingesetzte Prüfsonde ist zweckmäßig eine an der Spitze eines Spulenträgers angeordnete Spule. Die Aufnehmerwicklung ist der Meßobjektform- beziehungsweise Aufgabe angepaßt. Sinnvoll wird die Größe der verwendeten Spule daran orientiert, ob eine Aussage über die durchschnittliche Härte einer größeren Fläche des Prüfobjektes bereits ausreicht, oder ob eine detaillierte Rasterung der Prüfoberfläche erforderlich ist.

Von Vorteil kann es in einigen Anwendungen sein, beispielsweise bei Innenmessungen in Bohrungen, die Aufnehmerspule mit Abdeckungen zu versehen, und die Messung der zu untersuchenden Oberfläche nur über den nichtabgedeckten Teil der Prüfspule durchzuführen.

Ein im Spulenzentrum angeordneter Ferritkern erhöht in vorteilhafter Weise den Meßeffekt der Prüfspule.

Das vorgeschlagene Verfahren ist insbesondere geeignet zur Prüfung von nitrierten metallischen Werkstoffen.

Nachfolgend werden Ausführungsbeispiele der vorgeschlagenen Erfindung anhand der Zeichnung näher erläutert.

Zeichnung

Es zeigen Figur 1 einen Schnitt durch eine auf einen zu untersuchenden Werkstoff aufgesetzte Prüfsonde, Figur 2 eine Härteprofilkurve für einen Werkstoff ohne Verbindungsschicht, Figur 3 einen Schnitt durch eine spezielle Ausgestaltung einer Prüfsonde mit einem zugehörigen Prüfkörper, Figur 4 mögliche Schichtstrukturen eines zu untersuchenden Werkstoffs, Figur 5 eine Härteprofilkurve für einen Werkstoff mit einer Verbindungsschicht.

Beschreibung

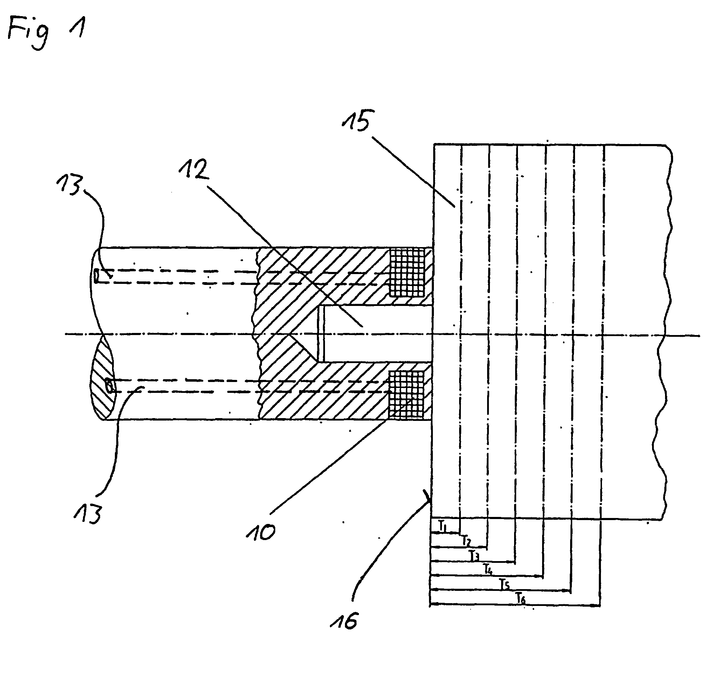

Figur 1 zeigt den prinzipiellen Aufbau einer zur Durchführung des vorgeschlagenen Verfahrens benötigten Prüfsonde. Sie besteht im wesentlichen aus einem Spulenträger 11, an dessen Spitze eine Sensorspule 10 angeordnet ist. Ihre Enden sind über Zuleitungen 13 mit einer nicht dargestellten Wechselspannungsgeneratoranordnung verbunden. Die Zuleitungen 13 können in (einer) Bohrung(-en) innerhalb des Spulenträgers 11 geführt sein. Im Zentrum der Sensorspule 10 kann ein Ferritkern 12 vorgesehen sein. Die Oberfläche der Prüfsonde ist an die Oberfläche 16 des zu untersuchenden Werkstoffes 15 angepaßt. Im Beispiel Figur 1 weist der Werkstoff 15 eine ebene Oberfläche 16 auf, entsprechend ist auch die Oberfläche der Prüfsonde plan ausgeführt.

Eine mögliche Ausführung der Prüfsonde für einen Düsenkörper mit einem Ventil an seiner Spitze zeigt Figur 3. In diesem Fall ist die zu prüfende Oberfläche 16 der kegelförmig ausgeführte Ventilsitz am Ende einer in den zu untersuchenden Werkstoff eingebrachten Bohrung. Entsprechend ist die Spitze der Prüfsonde mit der Sensorspule 10 ebenfalls kegelförmig ausgeführt. Zweckmäßig erfolgt bei zur Prüfung von Innenoberflächen bestimmten Ausführungen der Prüfsonde die Führung der Sensorspulenzuleitungen 13 stets innerhalb des Spulenträgers 11 in Bohrungen, wie in den Figuren 3 beziehungsweise 1 gezeigt, oder in am Umfang des Kerns angebrachten Nuten.

Für den Prüfvorgang wird die Prüfsonde schlüssig und fest auf die zu untersuchende Oberfläche 16 aufgesetzt. Ist diese Oberfläche 16 eine Innenoberfläche wie in Figur 3, die einen Düsenkörper mit einem Ventil an seiner Spitze darstellt, wird die Prüfsonde so weit in den Düsenkörper eingeschoben, bis sie möglichst eng auf dem Ventilsitz anliegt. An die Spule 10 wird in für das Induktiv- beziehungsweise Wirbelstromverfahren bekannter Weise ein hochfrequenter Wechselstrom zur Erzeugung eines magnetischen Wechselfeldes in der Spule 10 angelegt. In Abhängigkeit von der Frequenz des Wechselstroms sowie von den elektrischen und magnetischen Eigenschaften des untersuchten Werkstoffes dringt das magnetische Wechselfeld in den zu untersuchenden Werkstoff ein. Dabei beeinflußt seinerseits der untersuchte Werkstoff das magnetische Wechselfeld entsprechend der Eindringtiefe und seinen elektrischen beziehungsweise magnetischen Eigenschaften. Es stellt sich ein charakteristisches Magnetwechselfeld ein, welches meßbar ist.

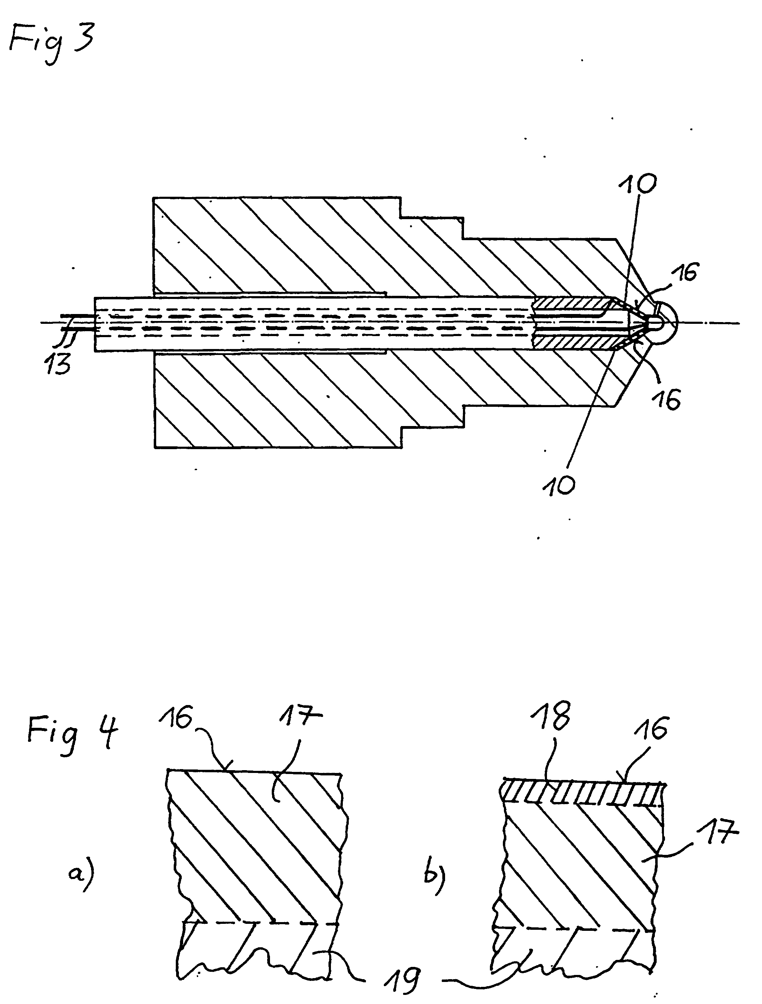

Es wird zunächst davon ausgegangen, daß die Oberfläche des zu untersuchenden Werkstoffes 15 eine Gefügestruktur mit über die gesamte Dicke zumindest ähnlichen physikalischen Eigenschaften aufweist, wie in Figur 4a gezeigt. Gegeben ist diese Situation zum Beispiel bei nitriertem Metall, bei dem durch Schleifen auf etwa 30 bis 50 μm die Verbindungsschicht abgetragen wurde, das deshalb, wie in Figur 4a gezeigt, auf der metallischen Grundlage 19 nur eine Oberflächenschicht 17 in Form einer Diffusionsschicht aufweist.

Zur Untersuchung des Werkstoffs 15 unmittelbar an der Oberfläche 16 wird die Frequenz des Spulenwechselstroms so eingestellt, daß die Eindringtiefe des hervorgerufenen magnetischen Wechselfeldes klein ist gegen die Gesamtdicke der zu untersuchenden Oberflächenschicht 17. Der genaue Frequenzwert wird entweder in bekannter Weise berechnet oder experimentell in Referenzmessungen ermittelt. Für die Frequenzfestlegung wird angenommen, daß der untersuchte Werkstoff die geforderte Materialzusammensetzung auch tatsächlich aufweist. Kleine Schwankungen der Materialzusammensetzung beeinflussen das Meßergebnis in der Regel nicht wesentlich und können hingenommen werden. In einer Musteranordnung zur Prüfung der nitrierten Oberfläche eines Ventils, wie in Figur 3 dargestellt, auf einer Dicke von 6 μm wurde eine Spulenwechselstromfrequenz von etwa, 3 MHz gewählt.

Das für die Spuleninduktivität erhaltene Meßsignal entspricht mit guter Genauigkeit der mittleren Härte der untersuchten Oberflächenschicht 17 bis zu der durch die Frequenz festgelegten Eindringtiefe. Durch einfache Zuordnung zu einem durch Rechnung ermittelten oder experimentell vorherbestimmten und in geeigneter Form gespeicherten Wert wird das Induktivitätsmeßsignal in einen Härtewert für die geprüfte Schicht überführt. Dabei sind der theoretisch-physikalische Zusammenhang zwischen beiden Größen, sowie das mathematische beziehungsweise experimentelle Vorgehen, die eine aus der anderen zu bestimmen, einem auf diesem Gebiet zuständigen Fachmann bekannt, siehe hierzu auch die in der Einleitung genannten Schriften.

Eine einfache Variation des vorstehend beschriebenen Verfahrens besteht darin, die Frequenz des Spulenwechselstroms so einzustellen, daß die Eindringtiefe des magnetischen Wechselfeldes in den zu untersuchenden Werkstoff im Bereich einer für die behandelte Oberflächenschicht geforderten Mindestdicke liegt, die typischerweise einige 100 μm beträgt. In einer Musteranordnung zur Prüfung einer nitrierten Oberfläche eines Ventils, wie in Figur 3 dargestellt, darauf, ob die Dicke einer wärmebehandelten Oberfläche mindestens 200 μm beträgt, wurde eine Frequenz von etwa 3 KHz eingestellt. Das Ergebnis einer solchen Messung bei vergleichsweise niedriger Frequenz gestattet zum Beispiel eine Aussage über die Abriebfestigkeit der geprüften Schicht.

Vorteilhaft ist es, eine Messung mit höherer Frequenz, entsprechend einer geringeren Eindringtiefe, mit einer Messung bei tieferer Frequenz, entsprechend einer größeren Eindringtiefe, verfahrensmäßig zusammenzufassen und jeweils nacheinander auszuführen. Dabei liefert die Messung bei höherer Frequenz eine Aussage über die Härte unmittelbar an der Oberfläche 16, die Messung bei niedriger Frequenz zum Beispiel eine Aussage über zulässige Abriebverluste der geprüften Schicht. Eine solche Kombination von Meßschritten gestattet es, Werkstoffe im Hinblick auf ihre Verwendbarkeit wesentlich sicherer zu beurteilen, als dies mit nur einer Messung bei einer Frequenz möglich ist. Beispielsweise können Meßobjekte beanstandet werden, deren Oberflächen zwar eine geforderte Härte aufweisen, die aber nicht ausreichend dick sind, um zu erwartenden Abriebverlusten standzuhalten. Ebenso kann ein Meßobjekt beanstandet werden, bei dem die Dicke der behandelten Oberflächenschicht zwar ausreichend ist, dessen Oberfläche aber eine geforderte Härte nicht erreicht.

In einer weiteren Ausgestaltung des Prüfungsverfahrens wird die Frequenz des Spulenwechselstroms stufenweise so geändert, daß das magnetische Wechselfeld bei der ersten Frequenz, wie in Figur 1 gezeigt, bis zur Eindringtiefe $T_1$, bei der zweiten Frequenz bis zu Eindringtiefe $T_2$, bei der dritten Frequenz bis zur Eindringtiefe $T_3$ usw. in den zu untersuchenden Werkstoff 15 eindringt. Dabei ist zu bachten, daß, um eine äquidistante Zunahme der Eindringtiefen beim Übergang von einer Frequenz zur nächsten zu erreichen, wie in Figur 1 dargestellt, die zugehörigen Frequenzen nichtlinear geändert werden müssen. So entsprach bei einer Musteranordnung zur Untersuchung einer Nitrierschicht eine Frequenz von 2,5 MHz einer Eindringtiefe von 7 μm, eine Frequenz von 600 KHz einer Eindringtiefe von 14 μm, eine Frequenz von 150 KHz einer Eindringtiefe von 28 μm. Zu jeder Frequenz wird wiederum die sich einstellende Induktivität der Spule 10 gemessen und in jeweils die mittlere Härte bis zur gemessenen Eindringtiefe bezeichnende Härtewerte umgerechnet. Figur 2 zeigt eine Folge von auf diese Weise gewonnenen Härtewerten HW, die hier nach Fischer in N/mm angegeben sind, in Form einer Folge von Balken über der in μm angegebenen Eindringtiefe T. Aus den jeweils durchschnittliche Härtewerte bezeichnenden Meßwerten kann mit Hilfe eines einfachen Algorithmus eine Härteprofilkurve 20, welche den schichtwiesen Härteverlauf wiedergibt, in folgender Weise ermittelt werden:

Für den ersten Punkt, x = 1:

$$K_x = G_{MW1}$$

Für alle weiteren Meßpunkte:

$$K_X = (G_{MWX} - G_{MW(X-1)}) X + G_{MW(X-1)}$$

Dabei sind
X: Anzahl der Meßpunkte ($X_1...X_n$)
$K_X$: Härtewert der Schicht zwischen (X-(X-1))
$G_{MWX}$: durchschnittlicher Härtewert des Meßpunktes X
$G_{MW(X-1)}$: durchschnittlicher Härtewert des Meßpunktes (X-1).

Eine auf diese Weise erhaltene Härteprofilkurve erlaubt in einfacher Weise eine Beurteilung des Gefügezustandes der betrachteten Oberflächenschicht, insbesondere gestattet sie eine differenzierte Aussage über die qualitative Beschaffenheit der behandelten Schicht.

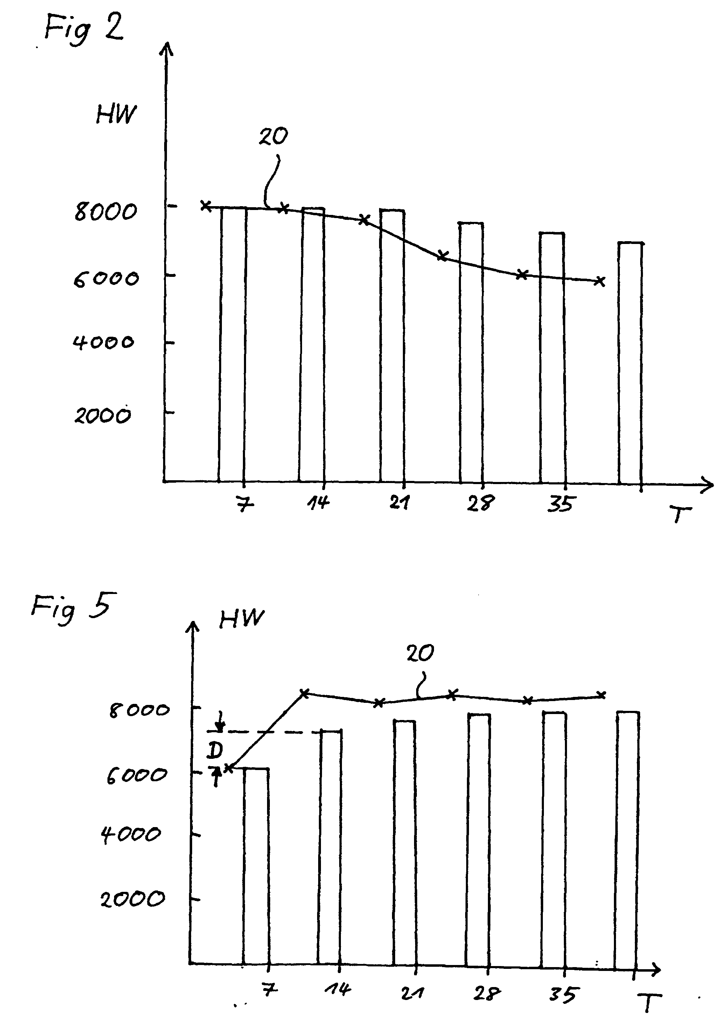

Bislang wurde von einer im wesentlichen nur aus einer Diffusionsschicht 17 mit über die gesamte Schicht ähnlichen physikalischen Eigenschaften bestehenden Oberfläche ausgegangen. Praktisch tritt aber auch der Fall auf, daß die Oberflächenschicht ihrerseits aus mehreren Teilschichten aufgebaut ist. Ein Beispiel hierfür ist eine nicht oder nur gerinfügig geschliffene nitrierte Metallschicht, wie in Figur 4b gezeigt. Sie weist auf dem metallischen Grundwerkstoff 19 eine dickere Diffusionsschicht 17 sowie darauf eine vergleichsweise dünne Verbindungsschicht 18 auf. Beide Teilschichten 17, 18 unterscheiden sich hinsichtlich ihrer elektrischen und magnetischen Eigenschaften. Dies führt besonders bei Messungen mit hohen Frequenzen, das heißt mit geringen Eindringtiefen, zu Verzerrungen des Meßergebnisses. Figur 5 zeigt ein Beispiel für eine Härteprofilkurve, die an einer nicht geschliffenen Nitrierschicht aufgenommen wurde. Aufgetragen ist wieder die Härte nach Fischer über der Eindringtiefe in μm. Im Bereich dicht unter der physikalischen Oberfläche 16 weist der untersuchte Werkstoff eine scheinbar geringere Härte auf. Der scheinbare Härteanstieg D zwischen erstem und zweitem Meßwert ist ein Maß für die Dicke der Verbindungsschicht 18, die auf diese Weise mit guter Genauigkeit bestimmbar ist.

Um sicherzustellen, daß eine scheinbar zunehmende Härte unmittelbar unterhalb der Oberfläche 16 des untersuchten Werkstoffes tatsächlich durch das Vorhandensein einer Verbindungsschicht 18 bedingt ist, empfielt es sich, zusätzlich Plausibilitätsbetrachtungen anzustellen, zum Beispiel in Form eines Vergleichs mit empirisch oder theoretisch ermittelten Referenzhärteprofilkurven.

Mit der Kenntnis der Verbindungsschichtdicke ist auch ihr Einfluß auf die Meßwerte bekannt. Er nimmt, weil mit zunehmender Eindringtiefe des Meßsignals das Verhältnis der Dicken von Verbindungsschicht 18 zu Diffusionsschicht 17 immer geringer wird, mit zunehmender Eindringtiefe ab. Damit ist es leicht möglich, die Meßergebnisse zu korrigieren.

Bei Werkstoffen mit behandelten Oberflächen, insbesondere bei nitrierten Metallen beeinflußt die Zusammensetzung des Grundmaterials (FE-Legierungen) das Meßsignal. Deshalb kann es zweckmäßig sein, auf eine Bezugsgröße bezogene Messungen durchzuführen. Durch Bezugsmessungen können die Einflüsse, die auf Änderungen der Legierungselementeanteile zurückzuführen sind, vermindert werden. Solche Bezugsmessungen werden zweckmäßig mit Hilfe einer zusätzlichen Bezugsspule durchgeführt, welche die Induktivität eines nicht behandelten Grundmateriales erfaßt. Soll eine sehr hohe Prüfgenauigkeit erreicht werden, kann es zusätzlich sinnvoll sein, jeweils vor und nach der thermischen oder mechanischen Behandlung Messungen mit der Prüfspule sowie mit der Bezugsspule durchzuführen und in Beziehung zu setzen.

Für eine genauere Untersuchung größerer Oberflächen kann es ferner zweckmäßig sein, die Sensorspule 10 mit einem elektrisch leitfähigen Material teilweise abzudecken, so daß das magnetische Wechselfeld nur durch die nicht abgedeckte Zone die Prüfoberfläche erreicht. Durch Bewegen der Prüfsonde auf der Oberfläche können dann zum Beispiel Kurven gewonnen werden, die den qualitativen Verlauf der Oberflächenhärte entlang der untersuchten Oberfläche wiedergeben. Dadurch lassen sich zum Beispiel neben Abweichungen von vorgegebenen Mindesthärten auch Konturfehler wie etwa Unrundheiten, Nuten oder Risse erkennen.

Das vorgeschlagene Verfahren eignet sich besonders zur Untersuchung von Nitrierschichten auf deren Härteeigenschaften, ist aber nicht auf dies Anwendung eingeschränkt. Ebenso kann es direkt oder nach geringer Modifikation zur Untersuchung vieler anderer Materialien oder Schichten eingesetzt werden.

## Patentansprüche

1.  Verfahren zum zerstörungsfreien Untersuchen von Oberflächen elektrisch leitfähiger Werkstoffe mittels einer Spule (10), die ein magnetisches Wechselfeld erzeugt, welchem der zu untersuchende Werkstoff ausgesetzt wird, wobei eine Spulenwechselstromfrequenz eingestellt und der Spule aufgeprägt wird, bei der die Eindringtiefe des magnetischen Wechselfeldes in den Werkstoff (15) innerhalb einer für die zu untersuchende Oberflächenschicht (17, 18) geforderten Dicke liegt, **dadurch gekennzeichnet, dass** die Änderung der Induktivität dieser Spule (10), die das sich einstellende magnetische Wechselfeld in ihr hervorruft, gemessen, und daraus eine Aussage über wenigstens eine Materialeigenschaft der untersuchten Oberfläche (16, 17, 18) im Bereich der Eindringtiefe des magnetischen Wechselfeldes abgeleitet wird.

2.  Verfahren nach Anspruch 1, **dadurch gekennzeichnet, daß** die Spulenwechselstromfrequenz so eingestellt wird, daß die Eindringtiefe des magnetischen Wechselfeldes in den Werkstoff (15) klein ist gegen eine geforderte Dicke der zu untersuchenden Oberflächenschicht (17,18).

3.  Verfahren nach Anspruch 1, **dadurch gekennzeichnet, daß** die Spulenwechselstromfrequenz so eingestellt wird, daß die Eindringtiefe des magnetischen Wechselfeldes in den Werkstoff (15) etwa einer geforderten Dicke der zu untersuchenden Oberflächenschicht (17,18) entspricht.

4.  Verfahren nach Anspruch 1, **dadurch gekennzeichnet, daß** die untersuchte Materialeigenschaft die Härte der Oberfläche (16, 17, 18) ist.

5.  Verfahren nach Anspruch 4, **dadurch gekennzeichnet, daß** das Bestimmen der Härte durch Zuordnung des für die Induktivität erhaltenen Meßergebnisses zu einem vorbestimmten Härtewert erfolgt.

6.  Verfahren nach Anspruch 1, **gekennzeichnet durch** folgende Schritte:

    -   Einstellen einer Spulenwechselstromfrequenz
    -   Bestimmen der sich einstellenden Spuleninduktivität
    -   Ableiten einer Aussage über die mittlere Härte der behandelten Oberflächenschicht (17, 18) im Bereich der Eindringtiefe des magnetischen Wechselfeldes in den Werkstoff (15) aus dem Meßergebnis für eine eingestellte Wechselstromfrequenz
    -   Wiederholen der vorhergehenden Schritte für mehrere in einem Frequenzintervall liegende Frequenzen
    -   Ermitteln einer Härteprofilkurve aus allen, zu den verschiedenen Wechselstromfrequenzen gewonnenen Meßwerten.

7.  Verfahren nach Anspruch 6, **dadurch gekennzeichnet, daß** die Spulenwechselstromfrequenzen so gewählt werden, daß die zugehörigen Eindringtiefen in äquidistanten Abständen von einer kleinsten zu einer größten zunehmen.

8.  Verfahren nach Anspruch 5, **dadurch gekennzeichnet, daß** aus dem Verlauf der Härteprofilkurve eine Aussage über die Dicke der Oberflächenschicht (17,18) abgeleitet wird.

9.  Verfahren nach Anspruch 7, **dadurch gekennzeichnet, daß** aus wenigstens zwei aufeinanderfolgenden Meßergebnissen die Dicke einer Verbindungsschicht (18) ermittelt wird.

10. Verfahren nach Anspruch 7, **dadurch gekennzeichnet, daß** das Vorhandensein einer Verbindungsschicht durch Plausibilitätsbetrachtungen verifiziert wird.

## Claims

1.  Method for the nondestructive testing of surfaces of electrically conductive materials by means of a coil (10) which generates an alternating magnetic field to which the material to be tested is exposed, a coil alternating current frequency at which the depth of penetration of the alternating magnetic field into the material (15) is within a thickness required for the surface layer (17, 18) which is to be tested being set and applied to the coil, **characterized in that** the change in the inductance of this coil (10), which causes the alternating magnetic field to be established therein, is measured, and a statement concerning at least one materials property of the tested surface (16, 17, 18) in the region of the depth of penetration of the alternating magnetic field is derived from this measurement.

2.  Method according to Claim 1, **characterized in that** the coil alternating current frequency is set in such a way that the depth of penetration of the alternating magnetic field into the material (15) is low compared to a required thickness of the surface layer (17, 18) which is to be tested.

3.  Method according to Claim 1, **characterized in that** the coil alternating current frequency is set in such a way that the depth of penetration of the alternating magnetic field into the material (15) approximately corresponds to a required thickness of the surface layer (17, 18) which is to be tested.

4. Method according to Claim 1, **characterized in that** the materials property tested is the hardness of the surface (16, 17, 18).

5. Method according to Claim 4, **characterized in that** the hardness is determined by assigning the measurement result obtained for the inductance to a predetermined hardness value.

6. Method according to Claim 1, **characterized by** the following steps:

   - setting a coil alternating current frequency,
   - determining the coil inductance which is established,
   - deriving a statement concerning the mean hardness of the treated surface layer (17, 18) in the region of the depth of penetration of the alternating magnetic field into the material (15) from the measurement result for a set alternating current frequency,
   - repeating the previous steps for a plurality of frequencies which lie within a frequency range,
   - recording a hardness profile curve from all the measured values obtained at the different alternating current frequencies.

7. Method according to Claim 6, **characterized in that** the coil alternating current frequencies are selected in such a way that the associated depths of penetration increase at equidistant intervals from a lowest depth of penetration to a greatest depth of penetration.

8. Method according to Claim 5, **characterized in that** a statement concerning the thickness of the surface layer (17, 18) is derived from the path of the hardness profile curve.

9. Method according to Claim 7, **characterized in that** the thickness of a joining layer (18) is determined from at least two successive measurement results.

10. Method according to Claim 7, **characterized in that** the presence of a joining layer is verified by plausibility considerations.

**Revendications**

1. Procédé de contrôle non-destructif des surfaces de matériaux électro-conducteurs, au moyen d'une bobine (10) qui produit un champ alternatif magnétique auquel est soumis le matériau à contrôler, dans lequel une fréquence de courant alternatif de bobine est ajustée et adaptée à la bobine, par laquelle la profondeur de pénétration du champ alternatif magnétique se trouve dans le matériau (15) dans une épaisseur demandée pour la couche de surface à contrôler (17, 18), **caractérisé en ce que** la modification de l'inductance de cette bobine (10), qui provoque le réglage en elle du champ alternatif magnétique, est mesurée et permet de fournir une information sur au moins une propriété du matériau de la surface contrôlée (16, 17, 18) au niveau de la profondeur de pénétration du champ alternatif magnétique.

2. Procédé selon la revendication 1, **caractérisé en ce qu'** on ajuste la fréquence du courant alternatif de la bobine de telle sorte que la profondeur de pénétration du champ alternatif magnétique dans le matériau (15) soit faible par rapport à une épaisseur demandée de la couche de surface (17, 18) à contrôler.

3. Procédé selon la revendication 1, **caractérisé en ce qu'** on ajuste la fréquence du courant alternatif de la bobine de telle sorte que la profondeur de pénétration du champ alternatif magnétique dans le matériau (15) corresponde approximativement à une épaisseur demandée de la couche de surface (17, 18) à contrôler.

4. Procédé selon la revendication 1, **caractérisé en ce que** la propriété du matériau contrôlé est la dureté de la surface (16, 17, 18).

5. Procédé selon la revendication 4, **caractérisé en ce que** la détermination de la dureté est obtenue par l'association du résultat de mesure obtenu pour l'inductance avec une valeur de dureté prédéfinie.

6. Procédé selon la revendication 1, **caractérisé par** les étapes suivantes :

   - Réglage d'une fréquence de courant alternatif de la bobine.
   - Définition du réglage de l'inductance de la bobine.
   - Conversion d'une information sur la dureté moyenne de la couche de surface traitée (17, 18) au niveau de la profondeur de pénétration du champ alternatif magnétique dans le matériau (15) à partir d'un résultat de mesure pour une fréquence de courant alternatif réglée.
   - Répétition des étapes précédentes pour plusieurs fréquences à différents intervalles de fréquence.

- Détermination d'une courbe de profil de la dureté à partir de toutes les valeurs de mesure obtenues par les différentes fréquences de courant alternatif.

7. Procédé selon la revendication 6,
**caractérisé en ce qu'**
on choisit les fréquences de courant alternatif de la bobine de telle sorte que les profondeurs de pénétration correspondantes croissent à intervalles équidistants du plus petit vers le plus grand.

8. Procédé selon la revendication 5,
**caractérisé en ce qu'**
on obtient une information sur l'épaisseur de la couche de surface (17, 18) à partir de la modification de la courbe de profil de la dureté.

9. Procédé selon la revendication 7,
**caractérisé en ce qu'**
on obtient l'épaisseur d'une couche de liaison (18) à partir d'au moins deux résultats de mesure successifs.

10. Procédé selon la revendication 7,
**caractérisé en ce que**
la présence d'une couche de liaison est vérifiée par des considérations de vraisemblance.

Fig 1

Fig 3

10

16

16

13

10

Fig 4    16    17

18    16

a)

17

b)

19

Fig 2

Fig 5